# EUROPEAN PATENT SPECIFICATION

(11) **EP 0 865 699 B1**
(45) Date of publication and mention of the grant of the patent: **02.04.2003**
(21) Application number: 97910903.0
(22) Date of filing: 08.10.1997
(51) Int. Cl.: H04L 25/06

(54) **METHOD AND APPARATUS FOR CANCELLATION OF DC OFFSET AND RECONSTRUCTION OF LOW FREQUENCY COMPONENTS OF BASEBAND SIGNAL**
VERFAHREN UND EINRICHTUNG ZUM AUSGLEICH VON GLEICHSPANNUNGSVERSCHIEBUNGEN UND WIEDERHERSTELLEN DER NIEDERFREQUENTEN KOMPONENTEN EINES BASISBANDSIGNALS
PROCEDE ET DISPOSITIF D'ANNULATION DU DECALAGE DU NIVEAU CONTINU ET DE RECONSTRUCTION DES COMPOSANTES BASSE FREQUENCE DU SIGNAL EN BANDE DE BASE

(30) Priority: 08.10.1996 US 727350
(43) Date of publication of application: 23.09.1998
(73) Proprietor: HARRIS CORPORATION, Melbourne Florida 32919 (US)
(72) Inventor: BARBER, Andrew, C., Venice, CA 90291 (US)
(74) Representative: Meddle, Alan Leonard
(86) International application number: US9718392
(87) International publication number: WO98016039

(56) References cited:
- EP-A- 0 016 503
- EP-A- 0 073 400
- WING SHING DJEN ET AL: "PERFORMANCE IMPROVEMENT METHODS FOR DECT AND OTHER NON-COHERENT GMSK SYSTEMS" FROM PIONEERS TO THE 21ST. CENTURY, DENVER, MAY 10 - 13, 1992, vol. 1 OF 2, 10 May 1992, INSTITUTE OF ELECTRICAL AND ELECTRONICS ENGINEERS, pages 97-100, XP000339693
- WALDHAUER: "Quantized feedback in a experimental 280-mb/s digital repeater for coaxial transmission" IEEE TRANSACTIONS ON COMMUNICATIONS, vol. com-22, no. 1, January 1974, pages 1-5, XP002055332

## Description

### FIELD OF THE INVENTION

The present invention relates in general to communication systems, and is particularly directed to a signal processing mechanism for reconstructing low frequency information that has been removed by high pass-filtering of a baseband signal prior to data decision processing, and canceling low frequency DC impairments to the baseband signal, such as may be introduced by mechanical stress in a printed circuit board containing demodulator components, AGC amplifier effets, microphonics, and DC offset introduced by a high gain amplifier through which the baseband signal is amplified upstream of data recovery.

### BACKGROUND OF THE INVENTION

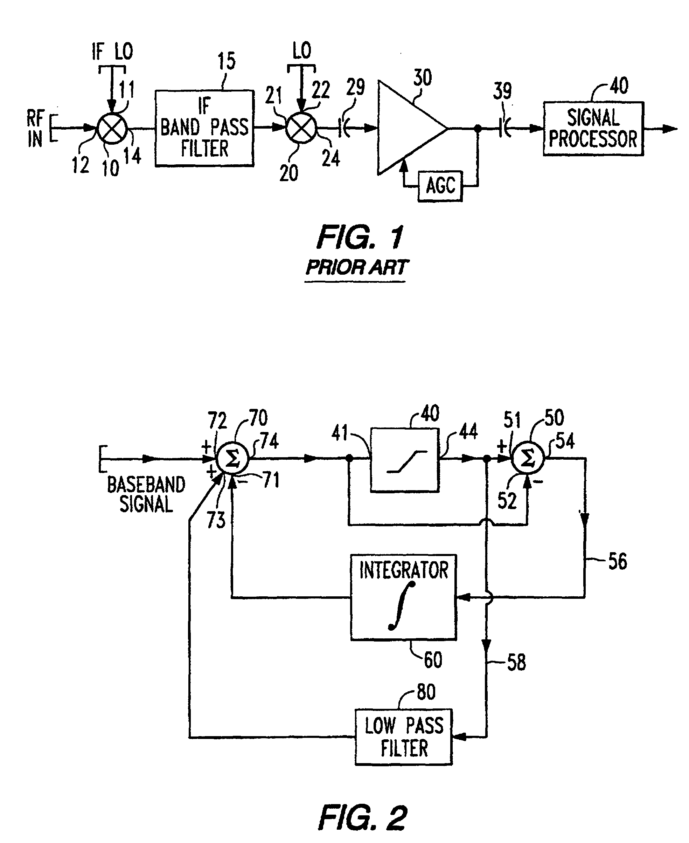

Figure 1 diagrammatically illustrates a simplified configuration of a baseband demodulator for an RF modem having a first down-converting mixer 10, to a first input 11 of which the output of a first IF local oscillator signal is applied and to a second input 12 of which a modulated RF signal of interest is applied. The output 14 of the mixer 10 is an intermediate frequency (IF) signal, which is to be down-converted to baseband for application to a data recovery signal processing circuit. For this purpose, the IF signal, which may be in the microvolt range, is coupled through an IF bandpass filter 15 to a first input 21 of a second down-converting mixer 20, which has a second input 22 coupled to receive the output of a second, baseband down-converting local oscillator, the amplitude of which typically varies in the millivolt range. Mixer 20 has an output 24 that produces a baseband signal containing the modulated data of interest.

The modulated baseband signal is coupled to an AGC-driven, high gain amplifier 30, which amplifies the (microvolt) baseband modulation up to a higher range of voltage amplitude variation (e.g., the millivolt range) for application to a downstream signal processing circuit 40. The signal processing circuit 40 compares a sample of the instantaneous amplitude of the baseband signal with one or more DC quantization levels, to extract modulation/data values associated with those quantization levels. In the case of a binary modulated signal, as a non-limiting example, the signal processing circuit 40 may comprise a simple polarity-sensitive comparator, the output of which is one of two binary values (0/1) depending upon the polarity of the AC-coupled baseband signal sample of interest.

Because the demodulation and amplifier components of the RF modem are very sensitive to ambient conditions, such as temperature, they are prone to introduce a substantial DC noise or offset component into the baseband signal. Such DC offset can be introduced into the baseband signal path from a number of sources including, but not limited to, mechanical stress in the printed circuit board containing the components of the demodulator circuitry, microphonics, and a DC offset introduced by the high gain amplifier.

As a consequence, it is customary practice to AC-couple the down-converted baseband signal to amplifier 30 by way of a high pass-filter (capacitor) 29, to remove such unwanted DC offset components. Similarly, to remove like effects that may introduced into the amplified baseband signal by the high gain amplifier, the output 34 of the amplifier 30 is coupled to the signal processing circuit 40 through a further high pass-filter (capacitor) 39.

Unfortunately, because such high pass-filtering effectively removes low frequency/DC level information prior to the data decision (quantization comparison) process carried output by signal processing circuit 40, it constitutes a source of error, sometimes referred to as low frequency 'swim'. Namely, although the intent of installing AC-coupling upstream of the data recovery circuitry is to remove what may be a very substantial DC offset level upon which the baseband modulation is riding, it has the undesirable effect of both removing a prescribed (low frequency) portion of the useful frequency spectrum of the data of interest, and of distorting the amplitude values of the signal constellation input to the quantization circuitry.

WING SHING DJEN ET AL: 'PERFORMANCE IMPROVEMENT METHODS FOR DECT AND OTHER NON-COHERENT CMSK SYSTEMS' FROM PIONEERES TO THE 21^{ST} CENTURY, DENVER, MAY 10-13, 1992, vol. 1 of 2, 10 May 1992, INSTITUTE OF ELECTRICAL AND ELECTRONICS ENGINEERS, pages 97 - 100, XP000339693 discloses a signal processing circuit for DC offset compensation in a GMSK system. The signal processing circuit comprises a post-processing combiner, a feedback path including an integrator, and a pre-processing combiner.

WALDHAUER: 'Quantized feedback in a experimental 280-mb/s digital repeater for coaxial transmission' IEEE TRANSACTIONS ON COMMUNICATIONS; vol. com-22, no. 1, January 1974, pages 1-5, XP002055332 discloses a quantized feedback in a digital repeater for coaxial transmission, in which baseline-wander is cancelled by an equal and opposite signal derived from the repeater output. The pulse stream is quantized to a pre-determined level by a regenerator, passed through a linear filter that is complementary to the forward-path low-frequency cut-off, and added to the incoming signal ahead of the regenerator.

### SUMMARY OF THE INVENTION

In accordance with the present invention, the above-described information loss and DC offset impairment problems associated with AC-coupling the signal processing path of an RF modem are effectively obviated by a low frequency reconstruction or reinsertion and DC offset cancellation signal processing methodology. Pursuant to a first aspect of this methodology, the quantized data output of a baseband slicer/comparator is differentially combined in an output combiner with the baseband signal to produce a wideband error signal. This error signal is integrated to derive a DC correction component.

This DC correction component is fed back to a pre-processor combiner, which differentially combines the DC correction component with the AC-coupled baseband signal. The output of the pre-processor combiner is thus the baseband signal of interest, absent the slowly varying DC offset error component, so that the amplitude values of the signal constellation input to the quantization circuitry of the data recovery processor are not distorted by the slowly varying DC offset level upon which the baseband modulation is riding.

In accordance with a second aspect of the invention, the quantized data output of the slicer/comparator is coupled to a low pass filter whose upper cut-off frequency substantially corresponds to the lower cut-off frequency of the high pass filtering (capacitive AC-coupling) of the baseband signal upstream of the comparator. The effect of the low pass filter is to recover an exact representation of the low frequency signal component of the baseband signal that had been removed by the AC-coupling of the baseband signal prior to its application to the signal processing comparator. For this purpose, the output of the low pass filter is coupled to a summing input of the pre-processor combiner, so as to be summed with the AC-coupled baseband signal (absent its removed low frequency component). Namely, by virtue of the low pass filter feedback path, the previously removed (low frequency) portion of the useful frequency spectrum of the baseband signal is reconstructed, and injected by the pre-processor combiner into the baseband signal path prior to its application to the comparator.

### BRIEF DESCRIPTION OF THE DRAWINGS

Figure 1 diagrammatically illustrates a simplified configuration of a baseband demodulator for an RF modem; and
Figure 2 diagrammatically illustrates a preferred embodiment of a low frequency reinsertion and DC offset cancellation mechanism in accordance with the present invention that may be used with a baseband demodulator of the type shown in Figure 1.

### DETAILED DESCRIPTION

A preferred, but non-limiting embodiment of the present invention will now be described with reference to Figure 2, which diagrammatically illustrates the manner in which the high pass-filter baseband signal at the output of high gain amplifier 30 is preliminarily combined, using fractional bandwidth feedback, with one or more correction signals prior to being introduced into the signal processing circuit 40. (As pointed out above, the signal processing circuit 40 comprises a comparator which is operative to compare a sample of the instantaneous amplitude of the amplified and AC-coupled baseband signal with one or more DC quantization levels, to extract modulation/data values associated with those quantization levels.)

Pursuant to a first aspect of the invention, the quantized data output 44 of slicer/comparator 40 is coupled to a first input 51 of a differential combiner or subtractor 50, a second input 52 of which is the baseband signal applied that is applied to the input 41 of comparator 40. Thus, the output 54 of differential combiner 50 is representative of the quantized/sliced data values produced by the comparator 40 and its input baseband sample values. These sampled signal amplitude differences constitute wideband error signals, which include the slowly varying DC component of the baseband signal. By slowly varying is meant a gradual rate of change approximate DC or on the order of only several Hz up to 10 Hz, as a non-limiting example, as opposed to a higher rate of change that may generally be classified as Gaussian noise.

This slowly varying wideband error signal produced by differential combiner 50 is coupled via a first fractional bandwidth feedback path 56 to an integrator 60, which has a high gain in the low frequency bandwidth of interest (e.g., 10 Hz., as a non-limiting example) and a substantially reduced gain above this range. Integrator 60 integrates the errors and thereby derives a DC correction component representative of the accumulated variation of the slowly varying wideband error signal.

The DC correction component is fed back to a first differential (-) input 71 of a pre-processor summing unit 70, which has a second (+) input 72 thereof AC-coupled to the output of amplifier 30, so that the signal input 72 of summing unit 70 is the high pass-filtered baseband signal of interest, riding on a slowly varying DC offset, such as may be introduced by mechanical stress in the printed circuit board, AGC amplifier effects, or microphonics effects, as described above. The output 74 of summing unit 70 is thus the difference between the baseband signal and the DC correction component produced by integrator 60, namely the high pass-filtered baseband signal of interest, absent the slowly varying DC offset error component.

Pursuant to a second aspect of the invention, the quantized data output 44 of slicer/comparator 40 is coupled via a second fractional bandwidth feedback path 58 to a low pass filter 80 having an upper cut-off frequency (e.g., 10Hz), that substantially corresponds to the lower cut-off frequency of the high pass filtering (capacitive AC-coupling) of the baseband signal upstream of the comparator 40. The effect of low pass filter 80 is to recover an exact representation of the energy content of the low frequency signal component of the baseband signal that had been removed by the AC-coupling of the baseband signal prior to its application to the signal processing circuit 40. The output of low pass filter 80 is coupled to a third (+) input 73 of summing unit 70, so as to be summed with the AC-coupled baseband signal (absent its removed low frequency component). Namely, by virtue of the low pass filter feedback path, the previously removed (low frequency) portion of the useful frequency spectrum of the baseband signal is reconstructed, and injected (via summing unit 70) into the baseband signal path prior to its application to comparator 40.

As will be appreciated from the foregoing description, the above-described information loss and DC offset problems associated with AC-coupling the signal processing path of an RF modem are effectively obviated in accordance with the present invention by a low frequency reconstruction and DC offset cancellation signal processing methodology, which is operative to reconstruct low frequency information that has been removed by high pass-filtering of a baseband signal prior to data decision processing, and to effectively cancel slowly varying DC impairments to the baseband signal. By integrating the difference between the quantized data output of the baseband comparator and the baseband signal, a DC correction component representative of the accumulated variation of the error signal is derived. By subtracting this DC correction component from the baseband signal the slowly varying DC offset error component is effectively removed, so that the amplitude values of the signal constellation input to the quantization circuitry of the data recovery processor are not distorted by the DC offset level upon which the baseband modulation is riding. Low pass-filtering the output of the slicer/comparator allows an exact representation of the low frequency signal component of the baseband signal that had been removed by the AC-coupling of the baseband signal prior to its application to the signal processing comparator to be recovered, so that it can be reinjected into the baseband signal path prior to its application to the comparator.

While I have shown and described an embodiment in accordance with the present invention, it is to be understood that the same is not limited thereto but is susceptible to numerous changes and modifications as known to a person skilled in the art, and I therefore do not wish to be limited to the details shown and described herein, but intend to cover all such changes and modifications as are obvious to one of ordinary skill in the art.

## Claims

1. A method of correcting for a variation in a DC level of a baseband signal, for use with a communication demodulator in which a modulated communication signal is down-converted to baseband, and is AC-coupled as said baseband signal to a signal processing circuit, said method comprising the steps of:
(a) coupling said baseband signal to said signal processing circuit (40) to derive an output signal representative of modulation contained in said baseband signal;
(b) differentially combining (50) baseband signal and said output signal to derive a wideband error signal;
(c) integrating (60) said error signal to derive a correction signal representative of accumulated variation of said error signal; and
(d) differentially combining (70) said correction signal with said baseband signal to remove said accumulated variation in DC level from said baseband signal.

2. The method according to claim 1, further including the step (e) of low pass-filtering (80) the output signal derived from said signal processing circuit (40) to recover a low frequency signal component of said baseband signal that had been removed by AC-coupling of said baseband signal to said signal processing circuit, and combining (70) the recovered low frequency signal component of said baseband signal with said baseband signal prior to application to said signal processing circuit (40).

3. A method according to one of the preceding claims, wherein said signal processing circuit is operative to derive said output signal in accordance with a comparison of said baseband signal with at least one quantization threshold.

4. A signal processing arrangement for correcting for a variation in a DC level of a baseband signal for use with a communication demodulator in which a modulated communication signal is down-converted to baseband, and AC-coupled as said baseband signal to a signal processing circuit (40), said signal processing circuit deriving an output signal representative of modulation contained in said baseband signal, said signal processing arrangement comprising:
a post-processing combiner (50) which is operative to differentially combine said baseband signal and said output signal to derive a wideband error signal;
a first fractional bandwidth feedback path (56) containing an integrator (60) which is operative to integrate said error signal to derive a correction signal representative of accumulated variation of said error signal; and
a pre-processing combiner (70) which is operative to differentially combine said correction signal with said baseband signal to remove said accumulated variation in said error signal from said baseband signal prior to its application to said signal processing circuit (40).

5. A signal processing arrangement according to claim 4, further including a second fractional bandwidth feedback path (58) containing a low pass filter (80) to which the output signal derived from said signal processing circuit (40) is applied so as to recover a low frequency signal component of said baseband signal that had been removed by AC-coupling of said baseband signal to said signal processing circuit (40), and wherein said pre-processing combiner (70) is operative to combine the recovered low frequency signal component of said baseband signal with said baseband signal prior to its application to said signal processing circuit (40).

6. A signal processing arrangement according to claim 4, for use with a communication demodulator in which a modulated communication signal is down-converted to baseband, and high pass-filtered prior to being coupled as said baseband signal to the signal processing circuit for deriving modulation contained in said baseband signal, said signal processing arrangement additionally comprising:
a low pass filter (80) which is operative to low pass filter said output signal derived from said signal processing circuit (40) to recover said low frequency signal component of said baseband signal that had been removed by high pass filtering of said baseband signal.

7. A signal processing arrangement according to claim 6, wherein said low pass filter has an upper cut-off frequency which substantially corresponds to a lower cut-off frequency of a high pass-filter of said communication demodulator.

8. A signal processing arrangement according to one of claims 4 to 7, wherein said signal processing circuit (40) is operative to derive said output signal in accordance with a comparison of said baseband signal with at least one quantitization threshold.

## Patentansprüche

1. Verfahren zum Korrigieren einer Schwankung in einem Gleichstromniveau eines Basisbandsignals zur Verwendung mit einem Kommunikationsdemodulator, in welchem ein moduliertes Kommunikationssignal in ein Basisband untersetzt wird und als Basisbandsignal mit einem Signalverarbeitungsschaltkreis Wechselstrom-gekoppelt wird, wobei das Verfahren die Schritte umfaßt:
(a) Koppeln des Basisbandsignals mit dem Signalverarbeitungsschaltkreis (40), um eine in dem Basisbandsignal enthaltene Modulation abzuleiten;
(b) Differenz-Kombinieren (50) des Basisbandsignals und des Ausgangssignal, um ein Breitband-Fehlersignal abzuleiten;
(c) Integrieren (60) des Fehlersignals, um eine Darstellung eines Korrektursignals der akkumulierten Schwankung des Fehlersignals abzuleiten; und
(d) Differenz-Kombinieren (70) des Korrektursignals mit dem Basisbandsignals, um die akkumulierte Schwankung in dem Gleichstromniveau aus dem Basisbandsignal zu entfernen.

2. Verfahren nach Anspruch 1, das weiterhin einen Schritt (e) einbezieht, der umfaßt:
Tiefpaßfiltern des von dem Signalverarbeitungsschaltkreis (40) abgeleiteten Ausgangssignals, um eine niederfrequente Signalkomponente des Basisbandsignals, das durch das Wechselstromkoppeln des Basisbandsignals mit dem Signalverarbeitungsschaltkreis entfernt wurde, wiederherzustellen, und
Kombinieren (70) der wiederhergestellten niederfrequenten Signalkomponente des Basisbandsignals mit dem Basisbandsignal, bevor es in dem Signalverarbeitungsschaltkreis (40) verwendet wird.

3. Verfahren nach einem der vorangegangenen Ansprüche, wobei der Signalverarbeitungsschaltkreis das Ausgangssignal entsprechend eines Vergleichs des Basisbandsignals mit zumindest einem Quantisierungsschwellwert ableiten kann.

4. Signalverarbeitungsanordnung zum Korrigieren einer Schwankung in einem Gleichstromniveau eines Basisbandsignals zur Verwendung mit einem Kommunikationsdemodulator, in dem ein Kommunikationssignal in ein Basisband untersetzt wird und als Basisbandsignal mit einem Signalverarbeitungsschaltkreis (40) Wechselstrom-gekoppelt wird, wobei der Signalverarbeitungsschaltkreis eine in dem Basisbandsignal enthaltene Ausgangssignaldarstellung einer Modulation ableitet und die Signalverarbeitungsanordnung umfaßt:
einen Nach-Verarbeitungs-Kombinierer (50), der das Basisbandsignal und das Ausgangssignal differenz-kombinieren kann, um ein Breitband-Fehlersignal abzuleiten;
einen ersten Bruchteils-Bandbreitenrückkopplungspfad (56), der einen Integrator (60) enthält, welcher das Fehlersignal integrieren kann, um eine Korrektursignaldarstellung der akkumulierten Schwankung des Fehlersignals abzuleiten; und
ein Vor-Verarbeitungs-Kombinierer (70), der das Korrektursignal mit dem Basisbandsignal differenz-kombinieren kann, um die akkumulierte Schwankung des Fehlersignals des Basisbandsignals vor dessen Verwendung in dem Signalverarbeitungsschaltkreis (40) zu entfernen.

5. Signalverarbeitungsanordnung nach Anspruch 4, die weiterhin einen zweiten Bruchteils-Bandbreitenrückkopplungspfad (58) umfaßt, der ein Tiefpaßfilter (80) enthält, an das das von dem Signalverarbeitungsschaltkreis (40) abgeleitete Ausgangssignal angelegt wird, um eine niederfrequente Signalkomponente des Basisbandsignals wiederherzustellen, welche durch die Wechselstromkopplung des Basisbandsignals mit dem Signalverarbeitungsschaltkreis (40) entfernt wurde, und wobei der Vor-Verarbeitungs-Kombinierer (70) die wiederhergestellte niederfrequente Signalkomponente des Basisbandsignals mit dem Basisbandsignal vor dessen Anlegen an den Signalverarbeitungsschaltkreis (40) kombinieren kann.

6. Signalverarbeitungsanordnung nach Anspruch 4 zur Verwendung mit einem Kommunikationsdemodulator, in dem ein moduliertes Kommunikationssignal in das Basisband untersetzt wird und hochpaßgefiltert wird, bevor es als dieses Basisbandsignal mit dem Signalverarbeitungsschaltkreis gekoppelt wird, um die in dem Basisbandsignal enthaltene Modulation abzuleiten, wobei die Signalverarbeitungsanordnung zusätzlich umfaßt:
ein Tiefpaßfilter (80), das das von dem Signalverarbeitungsschaltkreis (40) abgeleitete Ausgangssignal tiefpaßfilteren kann, um die niederfrequente Signalkomponente des Basisbandsignals wiederherzustellen, welche durch Hochpaßfiltem des Basisbandsignals entfernt wurde.

7. Signalverarbeitungsanordnung nach Anspruch 6, wobei das Tiefpaßfilter eine obere Grenzfrequenz hat, die im wesentlichen einer unteren Grenzfrequenz eines Hochpaßfilters des Kommunikationsmodulators entspricht.

8. Signalverarbeitungsanordnung nach einem der Ansprüche 4 bis 7, wobei der Signalverarbeitungsschaltkreis (40) das Ausgangssignal entsprechend des Vergleichs des Basisbandsignals mit zumindest einem Quantisierungsschwellwert ableiten kann.

## Revendications

1. Procédé de correction d'une variation dans un niveau continu d'un signal en bande de base, à utiliser avec un démodulateur de télécommunications dans lequel un signal de télécommunications modulé est abaissé à la fréquence de bande de base, et est couplé en courant alternatif comme ledit signal en bande de base à un circuit de traitement de signaux, ledit procédé comprenant les étapes consistant à :
(a) coupler ledit signal en bande de base audit circuit de traitement de signaux (40) représentatif d'une modulation contenue dans ledit signal en bande de base;
(b) combiner de manière différentielle (50) ledit signal en bande de base et ledit signal de sortie pour dériver un signal d'erreur à large bande ;
(c) intégrer (60) ledit signal d'erreur pour dériver un signal de correction représentatif d'une variation cumulée dudit signal d'erreur ; et
(d) combiner de manière différentielle (70) ledit signal de correction avec ledit signal en bande de base pour supprimer ladite variation cumulée dans le niveau continu dudit signal en bande de base.

2. Procédé selon la revendication 1, comprenant en outre l'étape (e) de filtrage passe-bas (80) du signal de sortie dérivé dudit circuit de traitement de signaux (40) pour récupérer une composante de signal basse fréquence dudit signal en bande de base qui a été supprimée par couplage à courant alternatif dudit signal en bande de base audit circuit de traitement de signaux, et en combinant (70) la composante de signal base fréquence reconstituée dudit signal en bande de base avec ledit signal en bande de base avant l'application dudit circuit de traitement de signaux (40).

3. Procédé selon l'une quelconque des revendications précédentes, dans lequel ledit circuit de traitement de signaux est actif pour dériver ledit signal de sortie selon une comparaison dudit signal en bande de base avec au moins un seuil de quantification.

4. Dispositif de traitement du signal pour corriger une variation dans un niveau continu d'un signal en bande de base pour une utilisation avec un démodulateur de télécommunications dans lequel un signal de télécommunications modulé est abaissé à la fréquence de bande de base, et est couplé en courant alternatif comme ledit signal en bande de base à un circuit de traitement de signaux (40), ledit circuit de traitement de signaux dérivant un signal de sortie représentatif de la modulation contenue dans ledit signal en bande de base, ledit dispositif de traitement du signal comprenant :
un combineur de prétraitement (50) qui est actif pour combiner ledit signal en bande de base et ledit signal de sortie pour dériver un signal d'erreur à large bande;
un premier trajet de contre-réaction à bande passante fractionnée (56) contenant un intégrateur (60) qui est actif pour intégrer ledit signal d'erreur afin de dériver un signal de correction représentatif d'une variation cumulée dudit signal d'erreur ; et
un combineur de prétraitement (70) qui est actif pour combiner de manière différentielle ledit signal de correction avec ledit signal en bande de base afin de supprimer ladite variation cumulée dans ledit signal d'erreur à partir dudit signal en bande de base avant son application audit circuit de traitement de signaux (40).

5. Dispositif de traitement du signal selon la revendication 4, comprenant en outre un second trajet de contre-réaction à bande passante fractionnée (58) contenant un filtre passe-bas (80) auquel le signal de sortie dérivé dudit circuit de traitement de signaux (40) est appliqué afin de récupérer une composante du signal basse fréquence dudit signal en bande de base qui avait été supprimée par le couplage à courant alternatif dudit circuit de traitement de signaux (40), et dans lequel ledit combineur de prétraitement (70) est actif pour combiner la composante du signal basse fréquence récupérée dudit signal en bande de base avec ledit signal en bande de base avant son application audit circuit de traitement de signaux (40).

6. Dispositif de traitement du signal selon la revendication 4, pour une utilisation avec un démodulateur de télécommunications dans lequel un signal de télécommunications modulé est abaissé à la fréquence de bande de base, et est filtré par filtrage passe-haut avant d'être couplé comme ledit signal en bande de base au circuit de traitement de signaux pour dériver la modulation contenue dans ledit signal en bande de base, ledit dispositif de traitement du signal comprenant en outre :
un filtre passe-bas (80) qui est actif pour filtrage passe-bas dudit signal de sortie dérivé dudit circuit de traitement de signaux (40) pour récupérer ladite composante du signal basse fréquence dudit signal en bande de base qui a été supprimée par filtrage passe-haut dudit signal en bande de.base.

7. Dispositif de traitement du signal selon la revendication 6, dans lequel ledit filtre passe-bas a une fréquence de coupure supérieure qui correspond substantiellement à une fréquence de coupure inférieure d'un filtre passe-haut dudit démodulateur de télécommunications.

8. Dispositif de traitement du signal selon l'une quelconque des revendications 4 à 7, dans lequel ledit circuit de traitement de signaux (40) est actif pour dériver ledit signal de sortie selon une comparaison dudit signal en bande de base avec au moins un seuil de quantification.
